# EUROPÄISCHE PATENTSCHRIFT

(11) **EP 1 767 932 B1**
(45) Veröffentlichungstag und Bekanntmachung des Hinweises auf die Patenterteilung: **14.05.2014**
(21) Anmeldenummer: 06017846.4
(22) Anmeldetag: 26.08.2006
(51) Int. Cl.: G01N 27/90

(54) **Vorrichtung und Verfahren zur zerstörungsfreien Prüfung von Bauteilen**
Device and method for non-destructive testing of components
Dispositif et procédé destinés à la vérification non destructive de composants

(30) Priorität: 23.09.2005 DE 102005046574
(43) Veröffentlichungstag der Anmeldung: 28.03.2007
(73) Patentinhaber: Fraunhofer-Gesellschaft zur Förderung der angewandten Forschung e.V., 80686 München (DE)
(72) Erfinder: Szielasko, Klaus, Dr., 66125 Saarbrücken (DE)
(74) Vertreter: Pfenning, Meinig & Partner GbR

(56) Entgegenhaltungen:
- EP-A- 0 100 009
- EP-A- 0 595 117
- WO-A-91/01496
- US-A- 4 207 520
- US-A- 5 619 135
- DATABASE WPI Week 200412 Derwent Publications Ltd., London, GB; AN 2004-111973 XP002412382 & JP 03 358740 B2 (NFP KK) 24. Dezember 2002 (2002-12-24) -& JP 06 102255 A (TECHNO DENSHI KK; N F P KK; WORLD POINTO KK) 15. April 1994 (1994-04-15)
- DATABASE WPI Week 200408 Derwent Publications Ltd., London, GB; AN 2004-074439 XP002412383 & JP 03 286958 B2 (NFP KK) 27. Mai 2002 (2002-05-27) & JP 06 102256 A (TECHNO DENSHI KK; N F P KK; WORLD POINTO KK) 15. April 1994 (1994-04-15)
- MILLER G ET AL: "A combined Q and heterodyne sensor incorporating real-time DSP for reinforcement imaging, corrosion detection and material characterisation" SENSORS AND ACTUATORS A, ELSEVIER SEQUOIA S.A., LAUSANNE, CH, Bd. 121, Nr. 2, 30. Juni 2005 (2005-06-30), Seiten 339-346, XP004913698 ISSN: 0924-4247
- G. ANTONELLI, F. BINASCO, G. DANESE, D. DOTTI: "Virtually Zero Cross-Talk Dual-Frequency Eddy Current Analyzer Based on Personal Computer" IEEE TRANS. INSTRUM. MEASUR., Bd. 43, Nr. 3, Juni 1994 (1994-06), Seiten 463-468, XP002411058
- JOHNSON M ET AL: "Hall-Effect Measurements under Alternating-Current Excitation for the Reconstruction of Obliterated Serial Numbers in Magnetic Steels", FINAL REPORT IOWA STATE UNIVERSITY,, 1 October 2004 (2004-10-01), XP007920068,
- OCTAVIAN POSTOLACHE ET AL: "Induction defectoscope based on uniform eddy current probe with GMRs", INSTRUMENTATION AND MEASUREMENT TECHNOLOGY CONFERENCE (I2MTC), 2010 IEEE, IEEE, PISCATAWAY, NJ, USA, 3 May 2010 (2010-05-03), pages 1278-1283, XP031691711, ISBN: 978-1-4244-2832-8

## Beschreibung

Die Erfindung betrifft die zerstörungsfreie elektromagnetische Prüfung von Bauteilen, wobei insbesondere Barkhausenrausch-, Oberwellen-, Wirbelstrom- und Überlagerungspermeabilitätsanalysen jeweils allein oder auch in Kombination durchführbar sind. Es lassen sich so Werkstoffzusammensetzungen, Eigenspannungen und auch Werkstofffehler an Bauteilen im oberflächennahen Bereich detektieren, ohne dass eine mechanische, physikalische oder chemische Beeinträchtigung von Bauteilen auftritt.

An sich bekannte elektromagnetische Prüfgeräte können mit vorab bezeichneten Analysen, Werkstoffeigenschaften von Bauteilen, wie beispielsweise Härte, Einhärtetiefe und Eigenspannungen, zerstörungsfrei bestimmen. Sie sind großformatig, insbesondere wegen der umfangreich erforderlichen Elektronik, und können daher schwer gehandhabt werden. Außerdem ist ein erhöhter Installationsaufwand vor dem Beginn einer Prüfung erforderlich.

Entsprechende Lösungen, die aber im Wesentlichen den Aufbau und die Anordnung sensitiver Elemente betreffen, sind in DE 42 35 387 C1 und EP 0 595 117 B1 beschrieben.

Aus WO 91/01496 A1 sind ein Verfahren und eine Vorrichtung zur zerstörungsfreien Prüfung bekannt.

Die EP 0 595 117 A1 betrifft eine Vorrichtung zur ortsaufgelösten, zerstörungsfreien Untersuchung von magnetischen Kenngrößen.

In der EP 0 100 009 A1 ist eine Vorrichtung zum Messen von Werkstoffeigenschaften offenbart.

Eine Vorrichtung zur zerstörungsfreien Detektion von Defekten an Rohren und Stäben ist in JP 3358740 B2 beschrieben.

Die JP 3286958 B2 betrifft eine magnetische Überwachungseinrichtung.

Von G. Miller u.a. sind in "A combined Q and heterodyne sensor incorporating real-time DSP for reinforcement imaging, corrosion detection and material characterisation"; Sensors and Actuators A; Bd. 121; Nr. 2; 30. Juni 2005; Seiten 339 bis 346 Möglichkeiten zur Detektion aufgezeigt.

G. Antonelli u.a. beschreiben die Ausnutzung von Wirbelstromtehniken in "Virtually Zero Cross-Talk Dual-Frequenz Eddy Current Analyzer Based on Personal Computer"; IEE Trans. Instrum. Measur.; Bd. 43 Nr. 3; Juni 1994 (1994-06); Seiten 463-468.

Es ist Aufgabe der Erfindung eine Möglichkeit für die zerstörungsfreie Prüfung von Bauteilen vorzuschlagen, die einfach und klein aufgebaut, flexibel einsetzbar sowie leicht handhabbar ist.

Erfindungsgemäß wird diese Aufgabe mit einer Vorrichtung nach Anspruch 1 sowie einem Verfahren nach Anspruch 7 gelöst.

Vorteilhafte Ausgestaltungen und Weiterbildungen der Erfindung können mit den in den untergeordneten Ansprüchen bezeichneten Merkmalen erreicht werden.

Die erfindungsgemäße Vorrichtung ist dabei so ausgebildet, dass ein Elektromagnet zur Beaufschlagung eines Bauteils mit einem elektromagnetischen Wechselfeld, zumindest in dessen oberflächennahen Bereich, auf die Oberfläche eines jeweiligen Bauteils aufgesetzt werden kann. Dieser ist, wie auch eine Detektionsspule und eine Hallsonde über mindestens eine A/D- und D/A-Wandlereinheit mit mindestens einem Kanal je Wandlungsrichtung über eine elektronische Schnittstelle mit einer externen elektronischen Auswerte- und Steuereinheit verbindbar.

Dabei können einzelne A/D- oder D/A-Wandler aber auch solche mit mehr als jeweils einem Kanal für die A/D- und D/A-Wandlereinheit eingesetzt werden.

Über mindestens einen D/A-Kanal kann dann die Steuerung des Elektromagneten erfolgen, und Messsignale von Detektionsspule und Hallsonde können über einen oder mehrere A/D-Kanäle in digitalisierter Form zur elektronischen Auswerte- und Steuereinheit übertragen und darin ausgewertet werden. In dieser Form ist ein kompakter Aufbau mit geringer Baugröße und guter Handhabbarkeit des eigentlichen sensitiven Teils der Vorrichtung, also ohne die elektronische Datenverarbeitungseinheit, die in einem mehr oder weniger großen Abstand vom zu prüfenden Bauteil installiert sein kann, möglich.

Durch entsprechend einsetzbare angepasste Software können sowohl die Steuerung, wie auch die Auswertung an unterschiedliche Bauteile und Werkstoffe angepaßt sein. Auch die Auswahl und Berücksichtigung der bereits erwähnten Analyseverfahren kann so flexibilisiert werden.

Durch den möglichen Einsatz integrierter Schaltungstechnik und den weitestgehenden Verzicht auf Steuerungs- und Signalverarbeitungselektronik, im mobilen teil der Vorrichtung kann die erforderliche Baugröße deutlich gegenüber den bekannten Lösungen reduziert werden.

Es ist ein Multiplexer vorhanden, über den Elektromagnet, Detektionsspule und Hallsonde sowie beispielsweise auch eine Referenzspannungsquelle mit der A/D- und D/A-Wandlereinheit verbunden sind. Mit dem Multiplexer kann eine Umschaltung der einzelnen Signalübertragungswege auf die A/D- oder D/A-Kanäle in gezielter und von der elektronischen Auswerte- und Steuereinheit gesteuerter Form sequentiell erfolgen. So können jeweils ausgewählte Messsignale oder ein Referenz- bzw. Kalibriersignal über eine ausgewählten A/D-Kanal zur elektronischen Auswerte- und Steuereinheit übertragen werden, je nach dem welche Auswertung bzw. Analyse vorab durch die Steuerung ausgewählt oder initiiert worden ist.

Günstig ist es, einen Elektromagneten mit U-förmigem Kern einzusetzen, dessen vorderen Stirnseiten seiner Schenkel in Richtung auf die Bauteiloberfläche weisen. Mittig zwischen den Schenkeln sollte die Hallsonde und die Detektionsspule in unmittelbare Nähe dazu angeordnet sein. Am günstigsten ist es, die Detektionsspule auf die Hallsonde zu wickeln.

Die Detektionsspule kann als Luftspule oder Spule mit Kern ausgebildet sein.

Die analogen Steuer- bzw. Betriebssignale können in analoger Form auf einen Leistungsverstärker übertragen und so die jeweilige Ausbildung des elektromagnetischen Wechselfeldes beeinflusst werden. Als Leistungsverstärker kann ein Audio-Operationsverstärker oder auch ein verlustarmer Klasse D-Verstärker eingesetzt werden. Die Versorgungsspannung des Leistungsverstärkers kann über die elektronische Schnittstelle, ein externes Netzteil oder einen internen Elektroenergiespeicher bereitgestellt werden. Am Elektromagnet kann so entweder die elektrische Eingangsspannung und/oder der Eingangsstrom der Eingangsspannung manipuliert werden.

Mit der Hallsonde kann die Tangentialkomponente des magnetischen Feldes an der Bauteiloberfläche, die in guter Näherung derjenigen im oberflächennahen Bereich des Bauteils entspricht. Das Ausgangssignal der Hallsonde ist dabei proportional zur Feldstärke. Es kann durch einen Tiefpassfilter bandbegrenzt und über einen A/D-Kanal und die elektronische Schnittstelle an die elektronische Auswerte- und Steuereinheit übertragen werden.

Während der periodischen Ummagnetisierung des Werkstoffs induzieren die auftretenden Barkhausen-Ereignisse kleine Spannungsimpulse in die Detektionsspule. Mit einem Hochpassfilter können diese Signale von überlagerten niederfrequenten Störanteilen des elektromagnetischen Wechselfeldes getrennt werden. Das Messsignal kann verstärkt und mit einem Tiefpassfilter in seiner Bandbreite begrenzt werden.

Die analogen Messsignale der Detektionsspule und/oder der Hallsonde sollten innerhalb vorgebbarer Intervalle gefiltert und innerhalb einer vorgegebenen Bandbreite übertragen und dann ausgewertet werden.

Der Eingangsspannungsbereich eines A/D-Wandlers sollte so ausgewählt sein, dass man das niederfrequente zeitaufgelöst erfasste Messsignal der elektrischen Spannung am Elektromagneten dem Barkhausenrauschsignal überlagern kann, ohne den Eingang dabei zu übersteuern. Das so erhaltene Mischmesssignal kann in der elektronischen Auswerte- und Steuereinheit mittels einer digitalen Filterung wieder in beide Messsignalkomponenten aufgetrennt und diese dann einzeln ausgewertet werden.

Elektromagnet, Leistungsverstärker und die elektrische Versorgungsspannung sollten so ausgewählt werden, dass insbesondere die am Leistungsverstärker zu verzeichnende Verlustleistung gering ist und dadurch eine Konvektionskühlung oder ein kleines Gebläse für eine ausreichende Kühlung genügen.
Bei der Messung sollte die Amplitude der elektromagnetischen Feldstärke des elektromagnetischen Feldes mittels der elektronischen Auswerte- und Steuereinheit und einem geeigneten Regelalgorithmus auf einem konstanten Wert gehalten werden.

Mit den erfassten Messsignalen kann eine Oberwellenanalyse der zeitaufgelöst erfassten Tangentialfeldstärke, eine Barkhausenrauschanalyse durch Auswertung der Einhüllenden des Barkhausenrauschsignals als Funktion der Magnetfeldstärke (Barkhausenrausch-Profilkurve), eine Wirbelstromanalyse durch Auswertung der Amplituden- und Phasenverhältnisse zwischen der Magnetisierungsspannung und der Feldstärke des elektromagnetischen Wechselfeldes sowie eine Überlagerungspermeabilitätsanalyse durch Einspeisung ausgewählter Mischsignale zur Steuerung des Elektromagneten und die Auswertung zeitaufgelöst erfasster Werte für die magnetische Tangentialfeldstärke durchgeführt werden.

Ein zweiter D/A-Kanal kann für die Steuerung des Multiplexers genutzt werden, der eine temperaturstabile Referenzspannung oder auch weitere elektronische oder elektrische Komponenten, alternativ zu den bereits konkret Benannten, für weitere Messsignale oder auch anderes, mit Ein- oder Ausgängen verbinden kann. So besteht die Möglichkeit diesen zweiten D/A-Kanal für die Speisung einer weiteren Endstufe für weitere Anwendungen zu nutzen.

Neben der bereits erwähnten zeitaufgelösten Erfassung von Messsignalen, kann dies auch zusätzlich und/oder ortsaufgelöst erfolgen, um die Messsignale bei der Auswertung auch den jeweiligen Positionen am Bauteil zuordnen, zu können.

Nachfolgend soll die Erfindung beispielhaft näher erläutert werden.

### Dabei zeigt:

### Figur 1

Ein Blockschaltbild eines Beispiels einer erfindungsgemäßen Vorrichtung.

Eine entsprechende Vorrichtung hat ohne elektronische Auswerte- und Steuereinheit 5, die beispielsweise ein herkömmlicher PC mit entsprechend installierter Software sein kann, eine Gesamtgröße mit Abmessungen von 115 * 65 * 35 mm. Mit einem externen Netzteil 15 kann eine elektrische Versorgungsspannung von 24 V zur Verfügung gestellt werden.

Es können Steuersignale aus der elektronischen Auswerte- und Steuereinheit 5 über die elektronische Schnittstelle 4, z.B. eine USB-Schnittstelle, und den D/A-Kanal 8 der A/D- und D/A-Wandlereinheit 6 zum Elektromagneten 1 in analoger Form zugeführt und so die Ausbildung des elektromagnetischen Wechselfeldes beeinflusst werden. Bei diesem Beispiel erfolgt dies zusätzlich mit dem Leistungsverstärker 7, dem die analogen Signale direkt aus dem D/A-Kanal 8 zugeführt werden.

Analoge Messsignale der Detektionsspule 2 und der Hallsonde 3 können bei entsprechender Schaltung des Multiplexers 14 über die A/D-Kanäle 11 und 12 und die elektronische Schnittstelle 4 zeitsynchron oder sequentiell dann über einen der beiden
A/D-Kanäle 11 oder 12 , der elektronischen Auswerte- und Steuereinheit 5 zugeführt und darin ausgewertet werden. Die Messung und Auswertung sollte dabei zeitaufgelöst erfolgen.

So können die zeitaufgelöst erfassten Messsignale der magnetischen Feldstärke über einen der A/D-Kanäle 12 und ein Mischsignal, das aus dem magnetischen Barkhausenrauschen und der elektrischen Spannung am Elektromagneten 1 besteht, über den anderen A/D-Kanal 11 übertragen werden.

Die D/A-Kanäle 8 und 9 werden hier für die Steuersignale für Leistungsverstärker 7 und Elektromagnet 1 sowie die Übertragung von Steuersignalen zum Multiplexer 14 genutzt. Mit dem Multiplexer 14 können für die einzelnen Komponenten 10, 13, 16 die A/D-Kanäle 11 oder 12 frei gegeben oder gesperrt werden.

Bei diesem Beispiel wurde eine integrierte Schaltung als A/D- und D/A-Wandlereinheit 6, mit jeweils zwei A/D-Kanälen 11, 12 und zwei D/A-Kanälen 8 und 9, eingesetzt. Es ist bereits eine integrierte USB-Schnittstelle 4 vorhanden. Es konnte bei der Digitalisierung eine Auflösung von 16 Bit mit einer Abtastrate von bis zu 48 kHz erreicht werden

Die Hallsonde 3 wird über eine Konstantspannungsquelle mit einer elektrischen Spannung von 5 V versorgt und überträgt ein zur Magnetfeldstärke proportionales Messsignal. Ihr Ausgang ist über ein passives Bandfilter hier, in Kombination mit einem Verstärker 16 mit dem Multiplexer verbunden.

Die Detektionsspule 2 für die Barkhausenrauschmessung ist eine scheibenförmig gewickelte Luftspule mit 800 Windungen. Aus dem induzierten Messsignal der elektrischen Spannung wird durch ein passives Hochpassfilter der Anteil des Barkhausenrauschens separiert und dann durch einen Instrumenttationsverstärker um 60 dB verstärkt. Das Ausgangssignal aus der Filter-Verstärker-Mischer Komponente 10 besitzt eine Bandbreite von ca. 20 kHz, was nahezu der vom A/D-Wandlerteil erfassten Bandbreite von 24 kHz (bei einer Abtastrate von 48 kHz) entspricht. Über ein Hochpassfilter für einen Potentialausgleich wird dieses Messsignal mit dem zweiten A/D-Kanal 11 verbunden.

Die Ausbildung des elektromagnetischen Wechselfeldes und die Magnetisierung des Bauteils 17 erfolgt mit dem Elektromagneten 1, der einen U-förmigen Kern hat. Sie wird über den Leistungsverstärker 7 gesteuert, mit elektrischer Spannung versorgt. Das Steuersignal wird über den D/A-Kanal 8 dem Leistungsverstärker 7 zugeführt. Das so übertragene Steuersignal ist periodisch und sinusförmig. Das an die Polschuhe des Elektromagneten 1 angesetzte Bauteil 17 wird so periodisch ummagnetisiert.

Beim Betrieb des Leistungsverstärkers 7 über ein externes Netzteil 15 kann durch angepasst dimensionierte Kondensatoren im Ausgangs- und Rückkopplungszweig ein Potentialausgleich erreicht werden. In Abhängigkeit von der Impedanz des Elektromagneten 1 können so Ummagnetisierungsfrequenzen von 10 bis 24.000 Hz ausgegeben werden.

Eine Kühlung des Leistungsverstärkers 7 kann durch seine Befestigung an einem Aluminiumgehäuse erreicht werden. Die maximale Verlustleistung liegt unter normalen Betriebsbedingungen unterhalb von 3 W.

Der zweite D/A-Kanal 9 dient zur Steuerung des Multiplexers 14, der wahlweise ein Feldstärke- und Barkhausenrauschmesssignal oder zwei Kalibrier- oder Referenzspannungen mit den Eingängen verbinden kann. Dadurch kann eine thermische Empfindlichkeit der A/D-und D/A-Wandlereinheit 6 in regelmäßigen Abständen ausgeglichen werden.

Außerdem ist bei diesem Beispiel ein interner Elektroenergiespeicher 18 vorhanden.

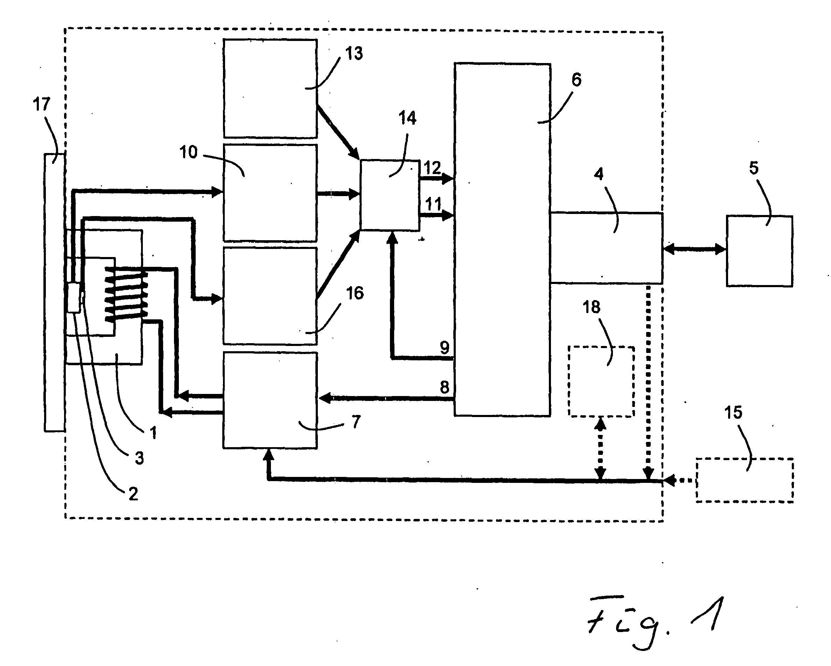

## Patentansprüche

1. Vorrichtung zur zerstörungsfreien Prüfung von Bauteilen, mit einem Elektromagneten(1) zur Beaufschlagung eines Bauteils mit einem elektromagnetischen Wechselfeld, einer Detektionsspule (2) und einer Hallsonde (3), einer Referenzspannungsquelle (13), einem Multiplexer (14), einer A/D- und D/A-Wandlereinheit (6) mit mindestens einem D/A-Kanal (8, 9) und mindestens zwei A/D-Kanälen (11, 12) und einer elektronischen Schnittstelle (4), die an eine externe elektronische Auswerte- und Steuereinheit (5) anschließbar ist, wobei der Elektromagnet (1) auf die Oberfläche des Bauteils aufsetzbar ist, wobei Detektionsspule (2), Hallsonde (3) und Referenzspannungsquelle (13) über den Multiplexer (14) mit den analogen Eingängen des Wandlers verbunden sind und wobei die Steuerung des Elektromagneten (1) über einen D/A-Kanal erfolgt.

2. Vorrichtung nach Anspruch 1, **dadurch gekennzeichnet, dass** zwischen den Schenkeln eines U-förmigen Kerns des Elektromagneten (1), die Hallsonde (3) mittig und die Detektionsspule (2) in unmittelbarer Nähe dazu angeordnet ist.

3. Vorrichtung nach Anspruch 2, **dadurch gekennzeichnet, dass** die Detektionsspule (2) auf die Hallsonde (3) gewickelt ist.

4. Vorrichtung nach einem der vorhergehenden Ansprüche, **dadurch gekennzeichnet, dass** die Detektionsspule (2) als Luftspule ausgebildet ist.

5. Vorrichtung nach einem der vorhergehenden Ansprüche, **dadurch gekennzeichnet, dass** der Elektromagnet (1) über einen D/A Kanal (8) und einen Leistungsverstärker (7) ansteuerbar ist.

6. Vorrichtung nach einem der vorhergehenden Ansprüche, **dadurch gekennzeichnet, dass** Messsignale von Detektionsspule (2) und Hallsonde (3) über Bandpassfilter/Verstärker-Einheiten (10, 16) mit A/D-Kanälen (11, 12) verbindbar sind.

7. Verfahren zur Zerstörungsfreien Prüfung von Bauteilen, bei dem digitale Steuersignale aus einer externen elektronischen Auswerte- und Steuereinheit (5) über einen Multiplexer (14) und einen D/A-Kanal (8) einer A/D- und D/A-Wandlereinheit (6) einem Elektromagneten (1) in analoger Form zugeführt werden, der ein elektromagnetisches Wechselfeld ausbildet, in dessen Einflussbereich das Bauteil (17) angeordnet ist;
analoge Messsignale einer Detektionsspule (2) und einer Hallsonde (3) über den Multiplexer (14), A/D-Kanäle (11, 12) und eine elektronische Schnittstelle (4) der elektronischen Auswerte- und Steuereinheit (5) zugeführt und darin ausgewertet werden; und wobei eine Referenzspannungsquelle über den Multiplexer (14) mit den analogen Eingängen des A/D-Wandlers verbunden ist.

8. Verfahren nach Anspruch 7, **dadurch gekennzeichnet, dass** eine Barkhausenrausch-, Oberwellen-, Wirbelstrom- und/oder Überlagerungspermeabili-tätsanalyse(n), bei einstellbaren Magnetisierungsfrequenzen und Magnetfeldamplituden durchgeführt werden.

9. Verfahren nach Anspruch 7 oder 8, **dadurch gekennzeichnet, dass** von der elektronischen Auswerte- und Steuereinheit (5) digitale Steuersignale über einen D/A-Kanal (9) als analoges Steuersignal auf den Multiplexer (14) gegeben werden und dadurch die ausgewählte Übertragung analoger Messsignale der Detektionsspule (2), der Hallsonde (3) oder ein Referenzsignal den A/D-Kanälen (11, 12) und dann über die Schnittstelle (4), als digitale Signale der elektronischen Auswerte- und Steuereinheit (5) zugeführt und darin ausgewertet werden.

10. Verfahren nach einem der Ansprüche 7 bis 9, **dadurch gekennzeichnet, dass** die analogen Messsignale der Detektionsspule (2) und/oder der Hallsonde (3) innerhalb vorgebbarer Intervalle gefiltert werden.

11. Verfahren nach einem der Ansprüche 7 bis 10, **dadurch gekennzeichnet, dass** mit einem gesteuerten Leistungsverstärker (7) die elektrische Eingangsspannung oder der Eingangsstrom der am Elektromagneten (1) anliegenden Eingangsspannung gesteuert wird.

12. Verfahren nach einem der Ansprüche 7 bis 11, **dadurch gekennzeichnet, dass** die Messsignale der Detektionsspule (2) und der Hallsonde (3) zeit- und/oder ortsaufgelöst erfasst und ausgewertet werden.

13. Verfahren nach einem der Ansprüche 7 bis 12, **dadurch gekennzeichnet, dass** von der Detektionsspule (2) niederfrequente zeitaufgelöst erfasste Messsignale der elektrischen Spannung des Elektromagneten (1) und Barkhausenrauschsignale nach einer Digitalisierung in der elektronischen Auswerte- und Steuereinheit (5) voneinander getrennt und ausgewertet werden.

14. Verfahren nach einem der Ansprüche 7 bis 13, **dadurch gekennzeichnet, dass** die Amplitude der elektromagnetischen Feldstärke des elektromagnetischen Wechselfeldes auf einem konstanten Wert gehalten wird.

15. Verfahren nach einem der Ansprüche 7 bis 14, **dadurch gekennzeichnet, dass** mit einer Referenzspannungsquelle (13) eine Referenzierung oder Kalibrierung durchgeführt wird.

## Claims

1. A device for the non-destructive testing of components, with an electromagnet (1) for subjecting a component to an electromagnetic alternating field, a detection coil (2) and a Hall probe (3), a reference voltage source (13), a multiplexer (14), an A/D and D/A converter unit (6) with at least one D/A channel (8, 9) and at least two A/D channels (11, 12), and an electronic interface (4) which can be connected to an external electronic evaluation and control unit (5), wherein the electromagnet (1) can be placed on the surface of the component, wherein the detection coil (2), Hall probe (3) and reference voltage source (13) are connected via the multiplexer (14) to the analog inputs of the converter, and wherein the electromagnet (1) is controlled via a D/A channel.

2. A device according to Claim 1, **characterised in that** the Hall probe (3) is arranged centrally, and the detection coil (2) is arranged in the immediate vicinity thereof, between the arms of a U-shaped core of the electromagnet (1).

3. A device according to Claim 2, **characterised in that** the detection coil (2) is wound on to the Hall probe (3).

4. A device according to one of the preceding claims, **characterised in that** the detection coil (2) is formed as an air-cored coil.

5. A device according to one of the preceding claims, **characterised in that** the electromagnet (1) can be controlled via a D/A channel (8) and a power amplifier (7).

6. A device according to one of the preceding claims, **characterised in that** measurement signals of the detection coil (2) and Hall probe (3) can be connected to A/D channels (11, 12) via band pass filter/amplifier units (10, 16).

7. A method for the non-destructive testing of components, in which digital control signals are supplied in analog form from an external electronic evaluation and control unit (5) to an electromagnet (1) via a multiplexer (14) and a D/A channel (8) of an A/D and D/A converter unit (6), which electromagnet forms an electromagnetic alternating field, in the field of influence of which the component (17) is arranged;
analog measurement signals of a detection coil (2) and a Hall probe (3) are supplied via the multiplexer (14), A/D channels (11, 12) and an electronic interface (4) to the electronic evaluation and control unit (5) and are evaluated therein; and wherein a reference voltage source is connected to the analog inputs of the A/D converter via the multiplexer (14).

8. A method according to Claim 7, **characterised in that** a Barkhausen noise analysis, harmonic analysis, eddy current analysis and/or incremental permeability analysis is/are carried out at adjustable magnetisation frequencies and magnetic field amplitudes.

9. A method according to Claim 7 or 8, **characterised in that** digital control signals are transmitted as an analog control signal from the electronic evaluation and control unit (5) to the multiplexer (14) via a D/A channel (9), and thereby the selected transmission of analog measurement signals of the detection coil (2), of the Hall probe (3), or a reference signal are supplied to the A/D channels (11, 12) and then via the interface (4) are delivered as digital signals to the electronic evaluation and control unit (5) and are evaluated therein.

10. A method according to one of Claims 7 to 9, **characterised in that** the analog measurement signals of the detection coil (2) and/or of the Hall probe (3) are filtered within presettable intervals.

11. A method according to one of Claims 7 to 10, **characterised in that** the electrical input voltage or the input current of the input voltage applied to the electromagnet (1) is controlled with a controlled power amplifier (7).

12. A method according to one of Claims 7 to 11, **characterised in that** the measurement signals of the detection coil (2) and of the Hall probe (3) are detected and evaluated in time-resolved and/or spatially-resolved manner.

13. A method according to one of Claims 7 to 12, **characterised in that** low-frequency measurement signals of the electrical voltage of the electromagnet (1) which are detected in time-resolved manner by the detection coil (2), and Barkhausen noise signals after digitisation are separated from each other and evaluated in the electronic evaluation and control unit (5).

14. A method according to one of Claims 7 to 13, **characterised in that** the amplitude of the electromagnetic field strength of the electromagnetic alternating field is kept at a constant value.

15. A method according to one of Claims 7 to 14, **characterised in that** referencing or calibration is carried out with a reference voltage source (13).

## Revendications

1. Dispositif destiné à un contrôle non destructif de composants, comprenant un électroaimant (1) servant à soumettre un composant à l'action d'un champ alternatif électromagnétique, une bobine de détection (2) et une sonde de Hall (3), une source de tension de référence (13), un multiplexeur (14), une unité de conversion A/N et N/A (6) dotée d'au moins un canal N/A (8, 9) et d'au moins deux canaux A/N (11, 12), et une interface électronique (4), qui peut être raccordée à une unité d'analyse et de commande (5) électronique externe, l'électroaimant (1) pouvant être placé sur la surface du composant, la bobine de détection (2), la sonde Hall (3) et la source de tension de référence (13) étant reliées aux entrées analogiques du convertisseur par l'intermédiaire du multiplexeur (14) et la commande de l'électroaimant (1) s'opérant par l'intermédiaire d'un canal N/A.

2. Dispositif selon la revendication 1, **caractérisé en ce que**, entre les branches d'un noyau en forme de U de l'électroaimant (1), la sonde de Hall (3) est disposée au centre et la bobine de détection (2) est disposée dans sa proximité immédiate.

3. Dispositif selon la revendication 2, **caractérisé en ce que** la bobine de détection (2) est enroulée sur la sonde de Hall (3).

4. Dispositif selon l'une quelconque des revendications précédentes, **caractérisé en ce que** la bobine de détection (2) est réalisée sous la forme d'une bobine à air.

5. Dispositif selon l'une quelconque des revendications précédentes, **caractérisé en ce que** l'électroaimant (1) peut être commandé par l'intermédiaire d'un canal N/A (8) et d'un amplificateur de puissance (7).

6. Dispositif selon l'une quelconque des revendications précédentes, **caractérisé en ce que** des signaux de mesure de la bobine de détection (2) et de la sonde de Hall (3) peuvent être reliés à des canaux A/N (11, 12) par l'intermédiaire d'unités de filtre passe-bande et d'amplificateur (10, 16).

7. Procédé destiné à un contrôle non destructif de composants, dans lequel des signaux de commande numériques en provenance d'une unité d'analyse et de commande (5) électronique externe sont amenés au format analogique à un électroaimant (1) par l'intermédiaire d'un multiplexeur (14) et d'un canal N/A (8) d'une unité de conversion A/N et N/A (6), ledit électroaimant formant un champ alternatif électromagnétique, dans la zone d'influence duquel le composant (17) est disposé,
des signaux de mesure analogiques d'une bobine de détection (2) et d'une sonde Hall (3) sont amenés, par l'intermédiaire du multiplexeur (14), de canaux A/N (11, 12) et d'une interface électronique (4), à l'unité d'analyse et de commande (5) électronique pour y être analysés ; une source de tension de référence étant reliée, par l'intermédiaire du multiplexeur (14) aux entrées analogiques du convertisseur A/N.

8. Procédé selon la revendication 7, **caractérisé en ce que** sont effectuées des analyses basées sur le bruit Barkhausen, des analyses des harmoniques, des analyses de courants de Foucault et/ou des analyses de la perméabilité de superpositions à des fréquences de magnétisation et des amplitudes de champ alternatif réglables.

9. Procédé selon la revendication 7 ou 8, **caractérisé en ce que** l'unité d'analyse et de commande (5) électronique délivre des signaux de commande numériques par l'intermédiaire d'un canal N/A (9) comme signal de commande analogique au multiplexeur (14), ce qui permet de transférer de manière sélective des signaux de mesure analogiques de la bobine de détection (2) et de la sonde de Hall (3), ou **en ce qu'**un signal de référence est amené aux canaux A/N (11, 12), puis par l'intermédiaire de l'interface (4), sous la forme de signaux numériques, à l'unité d'analyse et de commande (5) électronique pour y être analysés.

10. Procédé selon l'une quelconque des revendications 7 à 9, **caractérisé en ce que** les signaux de mesure analogiques de la bobine de détection (2) et/ou de la sonde de Hall (3) sont filtrés dans des intervalles prédéfinis.

11. Procédé selon l'une quelconque des revendications 7 à 10, **caractérisé en ce que** la tension d'entrée électrique ou le courant d'entrée de la tension d'entrée appliquée au niveau de l'électroaimant (1) sont commandés à l'aide d'un amplificateur de puissance (7) commandé.

12. Procédé selon l'une quelconque des revendications 7 à 11, **caractérisé en ce que** les signaux de mesure de la bobine de détection (2) et de la sonde de Hall (3) sont détectés et analysés avec une résolution temporelle et/ou spatiale.

13. Procédé selon l'une quelconque des revendications 7 à 12, **caractérisé en ce que** des signaux de mesure basse fréquence, détectés par résolution spatiale, de la tension électrique de l'électroaimant (1) et des signaux basés sur l'effet Barkhausen sont, après une numérisation dans l'unité d'analyse et de commande (5) électronique, séparés les uns des autres et analysés par la bobine de détection (2).

14. Procédé selon l'une quelconque des revendications 7 à 13, **caractérisé en ce que** l'amplitude de l'intensité de champ électromagnétique du champ alternatif électromagnétique est maintenue à une valeur constante.

15. Procédé selon l'une quelconque des revendications 7 à 14, **caractérisé en ce qu'**une opération de référencement ou une opération d'étalonnage sont effectuées à l'aide d'une source de tension de référence (13).
